# FASCICULE DE BREVET EUROPEEN

(11) **EP 3 986 726 B1**
(45) Date de publication et mention de la délivrance du brevet: **11.10.2023**
(21) Numéro de dépôt: 20742355.9
(22) Date de dépôt: 17.06.2020
(51) Int. Cl.: B60C 13/00

(54) **PNEUMATIQUE AVEC FLANCS COMPRENANT DES PROTUBÉRANCES CIRCONFÉRENTIELLES**
LUFREIFEN MIT UMLAUFENDEN ERHEBUNGEN AUF DEN SEITENWÄNDEN
PNEUMATIC TIRE WITH SIDEWALLS COMPRISING CIRCUMFERENTIAL PROTRUSIONS

(30) Priorité: 19.06.2019 FR 1906578
(43) Date de publication de la demande: 27.04.2022
(73) Titulaire: COMPAGNIE GENERALE DES ETABLISSEMENTS MICHELIN, 63000 Clermont-Ferrand (FR)
(72) Inventeur: BESTGEN, Luc, 63040 CLERMONT-FERRAND Cedex 9 (FR); BABAUD, Jacques, 63040 CLERMONT-FERRAND CEDEX 9 (FR); BERTON, Daniel, 63040 CLERMONT FERRAND CEDEX 9 (FR); THIEL, Baptiste, 63040 CLERMONT-FERRAND Cedex 9 (FR)
(74) Mandataire: Millanvois, Patrick Jacques Jean
(86) Numéro de dépôt international: PCT/FR2020/051044
(87) Numéro de publication internationale: WO 2020/254759

(56) Documents cités:
- WO-A1-03/010515
- WO-A2-2019/102151
- JP-A- 2007 055 498
- US-A- 4 809 757

## Description

La présente invention a pour objet un pneumatique destiné à rouler sur des sols agressifs, et plus particulièrement destiné à équiper un véhicule lourd utilisé sur des chantiers, tel que, par exemple un camion, un tracteur, ou une remorque.

De façon générale, un pneumatique a une géométrie de révolution par rapport à un axe de rotation. Il comprend un sommet avec une bande de roulement destinée à entrer en contact avec un sol, deux flancs prolongeant radialement vers l'intérieur les deux extrémités axiales du sommet jusqu'à deux bourrelets destinés à être montés sur une jante.

La constitution d'un pneumatique est usuellement décrite par une représentation de ses constituants dans un plan méridien, c'est-à-dire dans un plan contenant l'axe de rotation du pneumatique. Les directions radiale, axiale et circonférentielle désignent des directions respectivement perpendiculaire à l'axe de rotation du pneumatique, parallèle à l'axe de rotation du pneumatique et perpendiculaire à tout plan méridien. Dans le présent document, les expressions « radialement », « axialement » et « circonférentiellement » signifient respectivement « selon une direction radiale », « selon la direction axiale » et « selon une direction circonférentielle ». Les expressions « radialement intérieur », respectivement « radialement extérieur » signifient « plus proche », respectivement « plus éloigné, de l'axe de rotation du pneumatique, selon une direction radiale ». Les expressions « axialement intérieur », respectivement « axialement extérieur » signifient « plus proche », respectivement « plus éloigné, du plan médian du pneumatique, selon la direction axiale », le plan médian ou plan équatorial étant le plan circonférentiel perpendiculaire à l'axe de rotation du pneumatique et passant par le milieu de la bande de roulement.

Les pneumatiques destinés à équiper des véhicules circulant « hors la route », notamment dans des chantiers, comprennent en général des composants de renforcement ou de protection de leurs flancs, destinés à les rendre plus résistants aux agressions, en particulier aux agressions par des objets contondants tels que des tiges métalliques, par exemple des morceaux de fers à béton.

Par le document JP 61081207, il est connu d'ajouter, dans une zone comprise entre 30% et 75% de la hauteur d'un flanc, au moins trois nervures ou protubérances circonférentielles, chacune ayant une section méridienne arrondie et formant une protubérance par rapport à la face extérieure du flanc. Par le document US 20130263993, on connait aussi un pneumatique dont la partie radialement extérieure du flanc comporte un ensemble de nervures ou protubérances de protection, chaque nervure ayant une section méridienne ayant la forme d'un triangle rectangle, dont le sommet formant un angle droit est disposé radialement vers l'intérieur, la base du triangle rectangle étant confondue avec la face extérieure du flanc, le grand côté du triangle rectangle étant disposé radialement vers l'extérieur et le petit côté du triangle rectangle étant disposé radialement vers l'intérieur.

Lorsqu'un indenteur vient en contact avec une protubérance circonférentielle telle que précédemment décrite, cette protubérance circonférentielle est soumise à d'importantes déformations pouvant entraîner son endommagement, voire son arrachement, ce qui diminue la protection du flanc vis-à-vis des agressions mécaniques par des indenteurs.

Ainsi les inventeurs se sont donnés pour objectif d'améliorer la résistance mécanique des protubérances circonférentielles de flanc d'un pneumatique pour véhicule lourd destiné à rouler sur des sols agressifs, vis-à-vis des agressions par des indenteurs, et donc d'augmenter la protection des flancs.

Cet objectif a été atteint par un pneumatique pour véhicule lourd destiné à rouler sur des sols agressifs comprenant :
- deux flancs reliant un sommet, destiné à entrer en contact avec un sol, respectivement à deux bourrelets, destinés à être montés sur une jante,
- une armature de carcasse s'étendant d'un bourrelet à l'autre à travers les flancs et le sommet, et radialement intérieure à une armature de sommet s'étendant axialement dans le sommet,
- au moins un flanc comprenant, sur une face extérieure de flanc, au moins deux protubérances circonférentielles radialement positionnées à l'extérieur d'un point B de la face extérieure de flanc axialement aligné par rapport à un point M le plus axialement extérieur de l'armature de carcasse, la distance axiale entre les points B et M étant appelée épaisseur de flanc E,

- chaque protubérance circonférentielle ayant, dans un plan méridien contenant l'axe de rotation du pneumatique, une section méridienne délimitée par un contour,
- ladite section méridienne ayant une hauteur maximale H, mesurée perpendiculairement à partir de la face extérieure de flanc, au moins égale à E et au plus égale à 3^{∗}E, et une largeur moyenne L, mesurée parallèlement à la face extérieure de flanc à mi-hauteur H/2 de la section méridienne,
- chaque protubérance circonférentielle étant constituée par une composition caoutchoutique C1 ayant un module d'élasticité en extension à 10% d'allongement M1 au moins égal à 1.5 MPa et au plus égal à 6 MPa,
- la largeur moyenne L de la section méridienne de chaque protubérance circonférentielle étant au moins égale à une largeur minimale Lₘᵢₙ et au plus égale à une largeur maximale Lₘₐₓ,

la largeur minimale Lₘᵢₙ étant la largeur en deçà de laquelle au moins deux points distincts du contour de la section méridienne entrent en contact l'un avec l'autre, lorsque l'extrémité hémisphérique d'un indenteur, de rayon R égal à 15 mm, entre en contact avec la protubérance circonférentielle, l'indenteur ayant un axe D formant, dans le plan méridien et avec la direction radiale, un angle A égal à 15°, mesuré sur le pneumatique monté sur une jante nominale, gonflé à une pression nominale mais non écrasé, et se déplaçant radialement vers l'intérieur,
et la largeur maximale Lₘₐₓ étant la largeur au-delà de laquelle l'indenteur, se déplaçant radialement vers l'intérieur, ne peut pas franchir la protubérance.

L'invention concerne donc plus particulièrement la définition géométrique d'une protubérance circonférentielle de flanc de pneumatique destinée à protéger ce dernier contre les agressions d'un indenteur potentiellement présent sur le sol, tel que, par exemple, sur un chantier, un fer à béton ou tout type d'objet contondant.

Du point de vue géométrique, dans un plan méridien contenant l'axe de rotation du pneumatique, une protubérance est définie par une section méridienne délimitée par un contour et caractérisée par une hauteur maximale H et une largeur moyenne L.

La hauteur maximale H est la distance maximale entre le contour de la section méridienne et la face extérieure de flanc, mesurée perpendiculairement à partir de la face extérieure de flanc. Dans le contexte de l'invention, la hauteur maximale H est au moins égale à E et au plus égale à 3^{∗}E, E étant l'épaisseur de flanc au point B de la face extérieure de flanc axialement aligné avec le point M le plus axialement extérieur de l'armature de carcasse et mesurée selon une direction axiale à partir de l'armature de carcasse. Lorsque l'armature de carcasse est constituée de plusieurs couches de carcasse deux à deux adjacentes, le point M le plus axialement extérieur de l'armature de carcasse est le point le plus axialement extérieur de la couche de carcasse la plus axialement extérieure. On peut identifier ce point M le plus axialement extérieur de l'armature de carcasse, par exemple, par tomographie du pneumatique monté sur une jante de référence, gonflé à sa pression nominale au sens de la norme ETRTO, et non chargé.

La largeur moyenne L est mesurée le long d'une courbe parallèle à la face extérieure de flanc, positionnée à mi-hauteur H/2 de la section méridienne, c'est-à-dire à une distance de la face extérieure de flanc égale à H/2. Compte tenu des dimensions de la protubérance, elle est sensiblement égale à la distance entre les deux points d'intersection de ladite courbe à mi-hauteur H/2 de la section méridienne avec le contour de la section méridienne.

La hauteur maximale H et la largeur moyenne L sont donc toutes deux définies par rapport à la face extérieure de flanc, qui correspond à la face extérieure lisse du flanc, c'est-à-dire dépourvue de protubérances. La trace méridienne de la face extérieure lisse de flanc, c'est-à-dire dans un plan méridien, peut être définie mathématiquement par une spline cubique passant par trois points et ayant une tangente imposée en un point. A titre d'exemple, la spline cubique définissant la trace méridienne de la face extérieure lisse de flanc peut être définie par un premier point correspondant au point de la face extérieure de flanc axialement aligné avec le point le plus axialement extérieur de l'armature de carcasse, par un deuxième point de la face extérieure de flanc positionné entre les deux protubérances extrêmes à une distance minimale de l'armature de carcasse, et par un troisième point de la face extérieure de flanc positionné à la même distance radiale que l'extrémité axiale de l'armature de sommet. En outre la spline cubique a une tangente radiale au premier point précédemment défini.

Du point de vue du matériau, une protubérance est usuellement constituée par une composition caoutchoutique ayant un module d'élasticité en extension à 10% d'allongement M1 au moins égal à 1.5 MPa et au plus égal à 6 MPa. Un module d'élasticité en extension à 10% d'allongement est mesuré conformément à la norme française NF T 46-002 (septembre 1988). Selon cette norme, on mesure en seconde élongation (c'est-à-dire après un cycle d'accommodation) les modules sécants dits "nominaux" (ou contraintes apparentes, en MPa) à 10% d'allongement ("MA10") et 100% d'allongement ("MA100"). Toutes ces mesures de traction sont effectuées dans les conditions normales de température (23±2°C) et d'hygrométrie (50+5% d'humidité relative), selon la norme française NF T 40-101 (décembre 1979). On mesure également les contraintes à la rupture (en MPa) et les allongements à la rupture (en %), à une température de 23°C.

Selon l'invention, pour une protubérance de flanc ayant une hauteur maximale H donnée et un module d'élasticité en extension à 10% d'allongement M1 donné, la largeur moyenne L doit être au moins égale à une largeur minimale Lₘᵢₙ et au plus égale à une largeur maximale Lₘₐₓ. Dans cet intervalle de valeurs de largeur moyenne L, pour un indenteur ayant une extrémité hémisphérique de rayon R égal à 15 mm, ayant un axe D formant, dans le plan méridien et avec la direction radiale, un angle A égal à 15°, mesuré sur le pneumatique monté sur une jante nominale, gonflé à une pression nominale mais non écrasé, ces conditions nominales étant celles recommandées par la norme ETRTO, et l'indenteur se déplaçant radialement vers l'intérieur, ladite extrémité hémisphérique franchit successivement les différentes protubérances circonférentielles qu'elle intercepte, sans auto-contact au niveau des protubérances circonférentielles, ni blocage au niveau d'une quelconque des protubérances circonférentielles. Par définition, il y a auto-contact au niveau d'une protubérance circonférentielle, lorsqu'au moins deux points distincts du contour de la section méridienne de la protubérance circonférentielle entrent en contact l'un avec l'autre. En ce qui concerne l'entrée en contact de l'indenteur avec une protubérance circonférentielle, le point de l'extrémité hémisphérique, positionné sur l'axe D de l'indenteur, entre en contact avec le point de la protubérance circonférentielle correspondant à sa hauteur maximum H.

Si L est inférieure à Lₘᵢₙ, c'est-à-dire si L est trop petite, lors de l'entrée en contact d'un indenteur avec la protubérance, il y a une importante déformation de la protubérance, du fait de sa trop grande souplesse, avec un risque de contact entre au moins deux points du contour de sa section méridienne, en particulier sur sa face radialement intérieure. Cette entrée en contact d'au moins deux points du contour de la section méridienne entraine une forte mise en extension de la face radialement extérieure de la protubérance, d'où un risque d'initiation de fissure, généralement à la liaison entre la face radialement extérieure de la protubérance et le flanc, qui, après propagation, peut provoquer un arrachement de la protubérance.

Si L est supérieure à Lₘₐₓ, c'est-à-dire si L est trop élevée, lors de l'entrée en contact d'un indenteur avec la protubérance, l'indenteur ne peut plus franchir la protubérance radialement vers l'intérieur, du fait de la trop grande rigidité de la protubérance. Ce blocage de l'indenteur sur la protubérance peut entraîner une déformation trop importante de la face radialement extérieure de la protubérance, et un potentiel arrachement au moins partiel de ladite protubérance. A contrario, pour L inférieure à Lₘₐₓ, l'indenteur va pouvoir franchir facilement la protubérance et continuer sa course radialement vers l'intérieur. En passant la protubérance, l'indenteur va entrer en contact avec une autre partie du flanc, et préférentiellement avec la protubérance suivante radialement intérieure à la précédente, la protubérance précédente revenant dans son état mécanique initial non déformé. Avec un tel passage de l'indenteur de protubérance en protubérance, le pneumatique ne sera pas endommagé. Sans le passage des protubérances par l'indenteur, l'indenteur est susceptible de se bloquer au niveau d'une protubérance, entrainant une déformation locale du flanc pouvant provoquer une déchirure du flanc et, le cas échéant, une perte de pression rapide.

Préférentiellement la largeur moyenne L de la section méridienne de chaque protubérance circonférentielle est au moins égale à une largeur minimale Lₘᵢₙ = 0.2^{∗}H³/M1 et au plus égale à une largeur maximale Lₘₐₓ=0.7^{∗}H³/M1, avec H hauteur maximale de la section méridienne et M1 module d'élasticité en extension à 10% d'allongement de la composition caoutchoutique C1 de la protubérance circonférentielle.

Les valeurs de largeurs respectivement minimale Lₘᵢₙ et maximale Lₘₐₓ précédemment définies en fonction de la hauteur maximale H et du module d'élasticité en extension à 10% d'allongement M1, garantissent une rigidité optimale de la protubérance circonférentielle vis-à-vis d'une flexion sans auto-contact.

Selon une forme géométrique usuelle d'une protubérance de flanc, le contour de la section méridienne de chaque protubérance circonférentielle comprend une portion radialement extérieure, une portion radialement intérieure et une portion de raccordement entre la portion radialement extérieure et la portion radialement intérieure.

Selon une variante préférée de la forme géométrique usuelle d'une protubérance de flanc précédemment décrite, la section méridienne de chaque protubérance circonférentielle est un trapèze dont le petit côté est constitué par la portion radialement extérieure, le grand côté est constitué par la portion radialement intérieure et la petite base, sensiblement parallèle à la face extérieure de flanc, est constituée par la portion de raccordement. Dans le contexte de l'invention, un trapèze ne se limite pas à une stricte forme géométrique, mais s'étend à une forme sensiblement trapézoïdale, avec des côtés pouvant être curvilignes.

Chaque flanc ayant une composition caoutchoutique C2, la composition caoutchoutique C1 de chaque protubérance circonférentielle est préférentiellement identique à la composition caoutchoutique C2 du flanc. Une même composition chimique pour la protubérance et le flanc permet de mouler un profil d'assemblage flanc/protubérance constitué d'un matériau unique, d'où une simplicité de fabrication.

Préférentiellement chaque flanc comprend au moins deux protubérances circonférentielles. En effet les deux flancs d'un pneumatique sont susceptibles d'être agressés par un indenteur, d'où l'intérêt de les pourvoir tous les deux de protubérances, même si, en pratique, il a été constaté que la probabilité d'agression du flanc positionné du côté de l'intérieur du véhicule est plus faible que celle du flanc positionné du côté de l'extérieur du véhicule.

Encore préférentiellement, chaque flanc comprend au moins trois protubérances circonférentielles, pour renforcer encore la protection par rapport à deux protubérances.

Les caractéristiques de l'invention sont illustrées par les figures 1 à 5 schématiques et non représentées à l'échelle:
- Figure 1: Demi-coupe méridienne d'un pneumatique selon l'invention.
- Figure 2: Coupe méridienne d'une protubérance circonférentielle selon l'invention.
- Figure 3 : Coupe méridienne d'une protubérance circonférentielle selon l'invention, soumise à l'action d'un indenteur.
- Figures 4A, 4B, 4C : Passage d'un indenteur sur une protubérance circonférentielle selon l'invention.
- Figure 5 : Passage d'un indenteur sur une protubérance circonférentielle non conforme à l'invention.

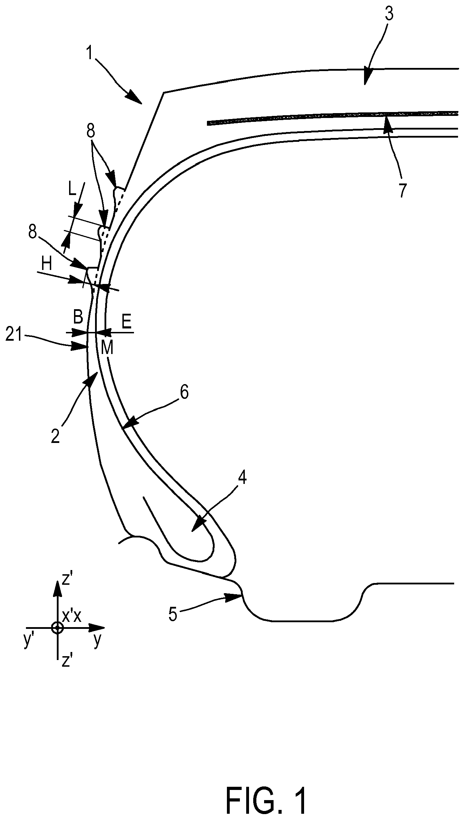

La figure 1 est une demi-coupe méridienne d'un pneumatique selon l'invention, dans un plan méridien YZ. Elle représente un pneumatique 1 pour véhicule lourd destiné à rouler sur des sols agressifs, comprenant deux flancs 2 reliant un sommet 3, destiné à entrer en contact avec un sol, respectivement à deux bourrelets 4, destinés à être montés sur une jante 5. Le pneumatique comprend en outre une armature de carcasse 6 s'étendant d'un bourrelet 4 à l'autre à travers les flancs 2 et le sommet 3, et radialement intérieure à une armature de sommet 7 s'étendant axialement dans le sommet 3. Dans le mode de réalisation représenté, chaque flanc 2 comprend, sur une face extérieure de flanc 21, trois protubérances circonférentielles 8 radialement positionnées à l'extérieur d'un point B de la face extérieure de flanc 21 axialement aligné par rapport à un point M le plus axialement extérieur de l'armature de carcasse 6, la distance axiale entre les points B et M étant appelée épaisseur de flanc E. La face extérieure de flanc 21 correspond à la face extérieure lisse du flanc, c'est-à-dire dépourvue de protubérances. Chaque protubérance circonférentielle 8 a une section méridienne ayant une hauteur maximale H, mesurée perpendiculairement à partir de la face extérieure de flanc 21 et une largeur moyenne L, mesurée parallèlement à la face extérieure de flanc 21 à mi-hauteur H/2 de la section méridienne.

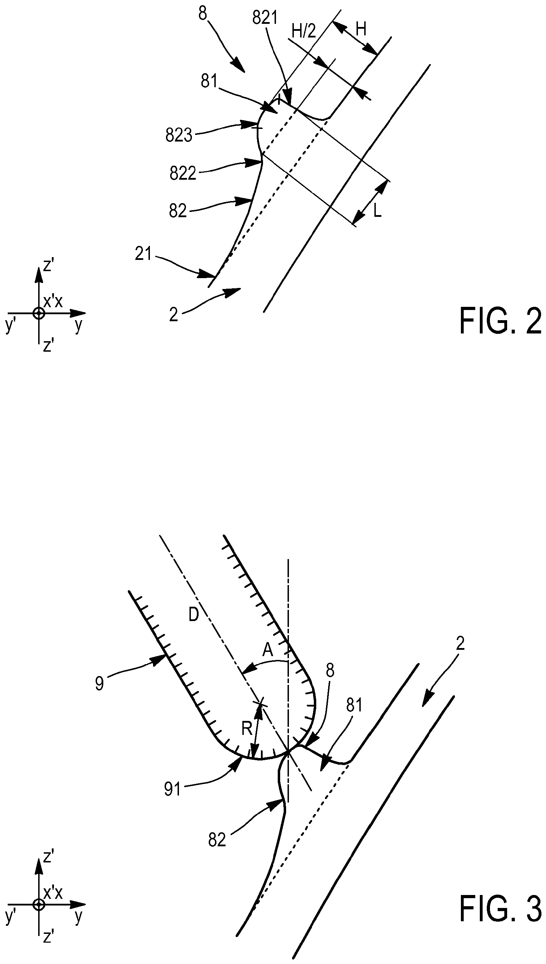

La figure 2 est une coupe méridienne d'une protubérance circonférentielle selon l'invention. La protubérance circonférentielle 8 a, dans un plan méridien YZ contenant l'axe de rotation du pneumatique, une section méridienne 81 délimitée par un contour 82, ladite section méridienne 81 ayant une hauteur maximale H, mesurée perpendiculairement à partir de la face extérieure de flanc 21, et une largeur moyenne L, mesurée parallèlement à la face extérieure de flanc 21 à mi-hauteur H/2 de la section méridienne 81. Dans le mode de réalisation représenté, le contour 82 de la section méridienne 81 de chaque protubérance circonférentielle 8 comprend une portion radialement extérieure 821, une portion radialement intérieure 822 et une portion de raccordement 823 entre la portion radialement extérieure 821 et la portion radialement intérieure 822. Plus précisément, la section méridienne 81 de la protubérance circonférentielle 8 est un trapèze dont le petit côté est constitué par la portion radialement extérieure 821, le grand côté est constitué par la portion radialement intérieure 822 et la petite base, sensiblement parallèle à la face extérieure de flanc 21, est constituée par la portion de raccordement 823.

La figure 3 est une coupe méridienne d'une protubérance circonférentielle selon l'invention, soumise à l'action d'un indenteur. L'extrémité hémisphérique 91 d'un indenteur 9, de rayon R égal à 15 mm, entre en contact avec la protubérance circonférentielle 8, l'indenteur 9 ayant un axe D formant, dans le plan méridien YZ et avec la direction radiale ZZ', un angle A égal à 15°, mesuré sur le pneumatique monté sur une jante nominale, gonflé à une pression nominale mais non écrasé, et se déplaçant radialement vers l'intérieur, c'est-à-dire en direction de la jante. Selon l'invention, la largeur moyenne L de la section méridienne 81 de la protubérance circonférentielle 8, représentée sur la figure 2, est au moins égale à une largeur minimale Lₘᵢₙ et au plus égale à une largeur maximale Lₘₐₓ, la largeur minimale Lₘᵢₙ étant la largeur en deçà de laquelle au moins deux points distincts du contour 82 de la section méridienne 81 entrent en contact l'un avec l'autre, sous l'action de l'indenteur 9, et la largeur maximale Lₘₐₓ étant la largeur au-delà de laquelle l'indenteur 9, se déplaçant radialement vers l'intérieur, ne peut pas franchir la protubérance 8.

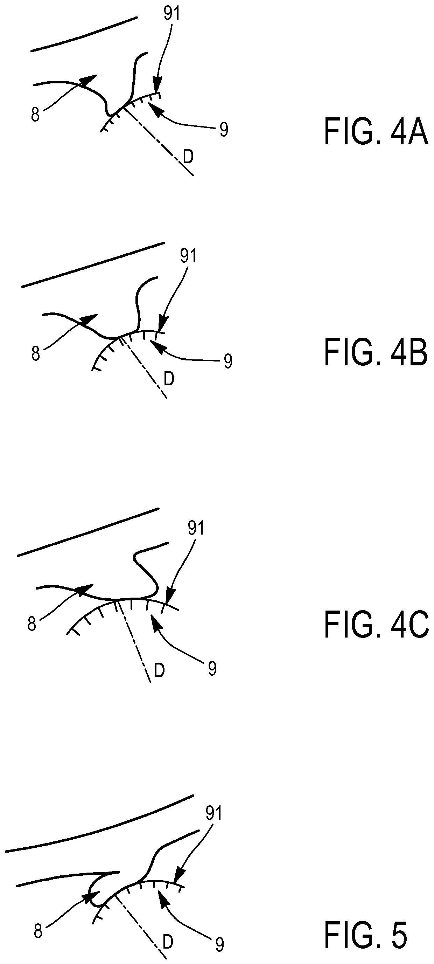

Les figures 4A, 4B, 4C schématisent le passage d'un indenteur sur une protubérance circonférentielle selon l'invention. Sur la figure 4A, l'extrémité hémisphérique 91 de l'indenteur 9 entre en contact avec la protubérance circonférentielle 8 et applique un effort réparti sur la portion radialement extérieure de son contour. Sur la figure 4B, l'extrémité hémisphérique 91 de l'indenteur 9 s'est radialement déplacée radialement vers l'intérieur en glissant sur la protubérance circonférentielle 8 et le contact est réalisé sur la portion de raccordement du contour. Sur la figure 4C, l'extrémité hémisphérique 91 de l'indenteur 9 a franchi la protubérance circonférentielle 8 et l'effort réparti est appliqué plutôt sur la portion radialement intérieure du contour. Pour cette protubérance circonférentielle conforme à l'invention, il n'y a pas d'auto-contact du contour, c'est-à-dire qu'il n'y a aucun contact entre deux points distincts du contour, sous l'action de l'indenteur.

La figure 5 schématise le passage d'un indenteur sur une protubérance circonférentielle non conforme à l'invention, c'est-à-dire dont la section méridienne a une largeur moyenne L à mi-hauteur H/2 en dehors de l'intervalle de valeurs revendiqué. On constate que, dans ce cas, la protubérance circonférentielle se replie sur elle-même. En d'autres termes, il y a un auto-contact du contour, caractérisé par l'entrée en contact de points distincts du contour.

Les inventeurs ont plus particulièrement étudié cette invention pour un pneumatique de dimension 385/65 R 22.5, destiné à être gonflé à une pression recommandée égale à 9 bars et à porter une charge recommandée égale à 4500 kg.

Chaque flanc de ce pneumatique, ayant, à son point d'armature de carcasse le plus axialement extérieur, une épaisseur E égale à 4.4 mm, est pourvue de trois protubérances circonférentielles positionnées radialement à l'extérieur dudit point le plus axialement extérieur. Les trois protubérances circonférentielles positionnées radialement de l'extérieur vers l'intérieur ont respectivement une section méridienne ayant une hauteur maximale H égale à 4.9, 5.3 et 5.5 mm, donc comprises entre E égal à 4.4 mm et 3^{∗}E égal à 13.2 mm, et respectivement une largeur moyenne L égale à 6.8, 8.3 et 9.2 mm. En outre chaque protubérance circonférentielle est constituée par une composition caoutchoutique C1, identique à celle du flanc, ayant un module d'élasticité en extension à 10% d'allongement M1 égal à 3.1 MPa, donc compris entre 1.5 MPa et 6 MPa. La largeur moyenne L vaut 0.4^{∗}H³/M1 pour les trois protubérances et est donc bien comprise entre 0.2^{∗}H³/M1 et 0.7^{∗}H³/M1.

Dans l'exemple étudié, les inventeurs ont optimisé, par des simulations par éléments finis, la géométrie des trois protubérances circonférentielles pour avoir un rapport constant entre la largeur moyenne L et le quotient entre le cube de la hauteur maximale H et le module d'élasticité en extension à 10% d'allongement M1, avec une hauteur maximale H légèrement croissante en allant du sommet vers le point B afin d'assurer une bonne protection du flanc. Ainsi, lorsqu'un pneumatique conforme à l'invention roule sur un indenteur, celui-ci peut franchir sans difficulté successivement les trois protubérances circonférentielles, positionnées sur chaque flanc, sans provoquer un auto-contact pour aucune d'entre elles et sans rester bloqué au niveau d'une d'entre elles.

Les inventeurs ont réalisé un test d'agression d'un pneumatique comprenant trois protubérances circonférentielles conformes à l'invention par un indenteur. Le pneumatique gonflé à 9 bars, chargé à 4500 kg et guidé en roulage par des rails, est soumis, au niveau d'un bord latéral de sa bande de roulement, à l'action d'un indenteur constitué par une tige cylindrique dont l'extrémité entrant en contact avec le pneumatique est une demi-sphère de rayon 15 mm. Cette extrémité d'indenteur est positionnée sur la face extérieure de flanc à 115 mm radialement à l'intérieur de la surface de roulement, est orientée perpendiculairement à la direction circonférentielle d'avancement du pneumatique et forme un angle de 50° par rapport à la direction radiale, cet angle étant mesuré sur le pneumatique monté sur une jante nominale, gonflé à une pression nominale et écrasé sous une charge nominale, ces conditions nominales étant celles recommandées par la norme ETRTO. Cet angle de 50° est évidemment supérieur à l'angle de 15°, mesuré sur le pneumatique monté sur une jante nominale, gonflé à une pression nominale mais non écrasé. Un film par caméra du test a permis de visualiser le passage successif de l'indenteur d'une protubérance circonférentielle à l'autre, au fur et à mesure de l'avancement du pneumatique, sans auto-contact ni blocage au niveau des protubérances circonférentielles, et sans agression visible de la face extérieure de flanc du pneumatique.

## Revendications

1. Pneumatique (1) pour véhicule lourd destiné à rouler sur des sols agressifs comprenant :
- deux flancs (2) reliant un sommet (3), destiné à entrer en contact avec un sol, respectivement à deux bourrelets (4), destinés à être montés sur une jante (5),
- une armature de carcasse (6) s'étendant d'un bourrelet (4) à l'autre à travers les flancs (2) et le sommet (3), et radialement intérieure à une armature de sommet (7) s'étendant axialement dans le sommet (3),
- au moins un flanc (2) comprenant, sur une face extérieure de flanc (21), au moins deux protubérances circonférentielles (8) radialement positionnées à l'extérieur d'un point B de la face extérieure de flanc (21) axialement aligné par rapport à un point M le plus axialement extérieur de l'armature de carcasse (6), la distance axiale entre les points B et M étant appelée épaisseur de flanc E,
- chaque protubérance circonférentielle (8) ayant, dans un plan méridien (YZ) contenant l'axe de rotation du pneumatique, une section méridienne (81) délimitée par un contour (82),
- ladite section méridienne (81) ayant une hauteur maximale H, mesurée perpendiculairement à partir de la face extérieure de flanc (21), au moins égale à E et au plus égale à 3^{∗}E, et une largeur moyenne L, mesurée parallèlement à la face extérieure de flanc (21) à mi-hauteur H/2 de la section méridienne (81),
- chaque protubérance circonférentielle (8) étant constituée par une composition caoutchoutique C1 ayant un module d'élasticité en extension à 10% d'allongement M1 au moins égal à 1.5 MPa et au plus égal à 6 MPa,
**caractérisé en ce que** la largeur moyenne L de la section méridienne (81) de chaque protubérance circonférentielle (8) est au moins égale à une largeur minimale Lₘᵢₙ et au plus égale à une largeur maximale Lₘₐₓ,
la largeur minimale Lₘᵢₙ étant la largeur en deçà de laquelle au moins deux points distincts du contour (82) de la section méridienne (81) entrent en contact l'un avec l'autre, lorsque l'extrémité hémisphérique (91) d'un indenteur (9), de rayon R égal à 15 mm, entre en contact avec la protubérance circonférentielle (8), l'indenteur (9) ayant un axe D formant, dans le plan méridien (YZ) et avec la direction radiale (ZZ'), un angle A égal à 15°, mesuré sur le pneumatique monté sur une jante nominale, gonflé à une pression nominale mais non écrasé, et se déplaçant radialement vers l'intérieur, c'est-à-dire la largeur en deçà de laquelle il y a un auto-contact de la protubérance circonférentielle (8) dû à son repliement sur elle-même,
et la largeur maximale Lₘₐₓ étant la largeur au-delà de laquelle l'extrémité hémisphérique (91) de l'indenteur (9), se déplaçant radialement vers l'intérieur, ne peut pas franchir la protubérance circonférentielle (8), c'est-à-dire la largeur au-delà de laquelle il y a un blocage de l'extrémité hémisphérique (91) de l'indenteur (9) au niveau de la protubérance circonférentielle (8).

2. Pneumatique (1) selon la revendication 1, **dans lequel** la largeur moyenne L de la section méridienne (81) de chaque protubérance circonférentielle (8) est au moins égale à une largeur minimale Lₘᵢₙ = 0.2^{∗}H³/M1 et au plus égale à une largeur maximale Lₘₐₓ=0.7^{∗}H³/M1, avec H hauteur maximale de la section méridienne (81) et M1 module d'élasticité en extension à 10% d'allongement de la composition caoutchoutique C1 de la protubérance circonférentielle (8).

3. Pneumatique (1) selon l'une des revendications 1 ou 2, **dans lequel** le contour (82) de la section méridienne (81) de chaque protubérance circonférentielle (8) comprend une portion radialement extérieure (821), une portion radialement intérieure (822) et une portion de raccordement (823) entre la portion radialement extérieure (821) et la portion radialement intérieure (822).

4. Pneumatique (1) selon la revendication 3, **dans lequel** la section méridienne (81) de chaque protubérance circonférentielle (8) est un trapèze dont le petit côté est constitué par la portion radialement extérieure (821), le grand côté est constitué par la portion radialement intérieure (822) et la petite base, sensiblement parallèle à la face extérieure de flanc (21), est constituée par la portion de raccordement (823).

5. Pneumatique (1) selon l'une quelconque des revendications 1 à 4, chaque flanc (2) ayant une composition caoutchoutique C2, **dans lequel** la composition caoutchoutique C1 de chaque protubérance circonférentielle (8) est identique à la composition caoutchoutique C2 du flanc (2).

6. Pneumatique (1) selon l'une quelconque des revendications 1 à 5, **dans lequel** chaque flanc (2) comprend au moins deux protubérances circonférentielles (8).

7. Pneumatique (1) selon l'une quelconque des revendications 1 à 6, **dans lequel** chaque flanc (2) comprend au moins trois protubérances circonférentielles (8).

## Patentansprüche

1. Reifen (1) für ein Schwerlastfahrzeug, welcher dazu bestimmt ist, auf aggressiven Böden eingesetzt zu werden, umfassend:
- zwei Seitenwände (2), die einen Scheitel (3), der dazu bestimmt ist, mit einem Boden in Kontakt zu kommen, jeweils mit einem von zwei Wülsten (4) verbinden, die dazu bestimmt sind, auf einer Felge (5) montiert zu werden,
- eine Karkassenbewehrung (6), die sich von einem Wulst (4) zum anderen durch die Seitenwände (2) und den Scheitel (3) erstreckt und sich radial innerhalb einer Scheitelbewehrung (7) befindet, die sich axial im Scheitel (3) erstreckt,
- wobei mindestens eine Seitenwand (2) auf einer Außenseite (21) der Seitenwand mindestens zwei umlaufende Erhebungen (8) umfasst, die radial außerhalb eines Punktes B der Außenseite (21) der Seitenwand positioniert sind, der in Bezug auf einen Punkt M axial ausgerichtet ist, welcher der axial äußerste Punkt der Karkassenbewehrung (6) ist, wobei der axiale Abstand zwischen den Punkten B und M Seitenwanddicke E genannt wird,
- wobei jede umlaufende Erhebung (8) in einer Meridianebene (YZ), welche die Drehachse des Reifens enthält, einen Meridianschnitt (81) aufweist, der von einer Kontur (82) begrenzt wird,
- wobei der Meridianschnitt (81) eine senkrecht von der Außenseite (21) der Seitenwand aus gemessene maximale Höhe H, die mindestens gleich E und höchstens gleich 3*E ist, und eine parallel zur Außenseite (21) der Seitenwand auf halber Höhe H/2 des Meridianschnitts (81) gemessene mittlere Breite L aufweist,
- wobei jede umlaufende Erhebung (8) aus einer Kautschukzusammensetzung C1 besteht, die einen Dehnungselastizitätsmodul bei 10 % Dehnung M1 aufweist, der mindestens gleich 1,5 MPa und höchstens gleich 6 MPa ist,
**dadurch gekennzeichnet, dass** die mittlere Breite L des Meridianschnitts (81) jeder umlaufenden Erhebung (8) mindestens gleich einer minimalen Breite Lₘᵢₙ und höchstens gleich einer maximalen Breite Lₘₐₓ ist,
wobei die minimale Breite Lₘᵢₙ die Breite ist, unterhalb von der mindestens zwei verschiedene Punkte der Kontur (82) des Meridianschnitts (81) miteinander in Kontakt kommen, wenn das halbkugelförmige Ende (91) eines Eindruckkörpers (9) mit einem Radius R von 15 mm in Kontakt mit der umlaufenden Erhebung (8) kommt, wobei der Eindruckkörper (9) eine Achse D aufweist, die in der Meridianebene (YZ) und mit der radialen Richtung (ZZ') einen Winkel A von 15° bildet, gemessen an dem auf einer Auslegungsfelge montierten, auf einen Nenndruck aufgepumpten, jedoch nicht zusammengedrückten Reifen, und sich radial nach innen bewegt, das heißt die Breite ist, unterhalb von der ein Kontakt der umlaufenden Erhebung (8) mit sich selbst infolge ihrer Faltung auf sich selbst erfolgt,
und wobei die maximale Breite Lₘₐₓ die Breite ist, oberhalb von der das halbkugelförmige Ende (91) des Eindruckkörpers (9), der sich radial nach innen bewegt, die umlaufende Erhebung (8) nicht überwinden kann, das heißt die Breite ist, oberhalb von der eine Blockierung des halbkugelförmigen Endes (91) des Eindruckkörpers (9) an der umlaufenden Erhebung (8) erfolgt.

2. Reifen (1) nach Anspruch 1, wobei die mittlere Breite L des Meridianschnitts (81) jeder umlaufenden Erhebung (8) mindestens gleich einer minimalen Breite Lₘᵢₙ = 0,2*H³/M1 und höchstens gleich einer maximalen Breite Lₘₐₓ = 0,7*H³/M1 ist, wobei H die maximale Höhe des Meridianschnitts (81) und M1 der Dehnungselastizitätsmodul bei 10 % Dehnung der Kautschukzusammensetzung C1 der umlaufenden Erhebung (8) ist.

3. Reifen (1) nach einem der Ansprüche 1 oder 2, wobei die Kontur (82) des Meridianschnitts (81) jeder umlaufenden Erhebung (8) einen radial äußeren Abschnitt (821), einen radial inneren Abschnitt (822) und einen Anschlussabschnitt (823) zwischen dem radial äußeren Abschnitt (821) und dem radial inneren Abschnitt (822) umfasst.

4. Reifen (1) nach Anspruch 3, wobei der Meridianschnitt (81) jeder umlaufenden Erhebung (8) ein Trapez ist, dessen kleiner Schenkel von dem radial äußeren Abschnitt (821) gebildet wird, dessen großer Schenkel von dem radial inneren Abschnitt (822) gebildet wird und dessen kleine Grundseite, die im Wesentlichen parallel zur Außenseite (21) der Seitenwand ist, von dem Anschlussabschnitt (823) gebildet wird.

5. Reifen (1) nach einem der Ansprüche 1 bis 4, wobei jede Seitenwand (2) eine Kautschukzusammensetzung C2 aufweist, wobei die Kautschukzusammensetzung C1 jeder umlaufenden Erhebung (8) mit der Kautschukzusammensetzung C2 der Seitenwand (2) identisch ist.

6. Reifen (1) nach einem der Ansprüche 1 bis 5, wobei jede Seitenwand (2) mindestens zwei umlaufende Erhebungen (8) umfasst.

7. Reifen (1) nach einem der Ansprüche 1 bis 6, wobei jede Seitenwand (2) mindestens drei umlaufende Erhebungen (8) umfasst.

## Claims

1. Tyre (1) for a heavy goods vehicle intended to travel on aggressive grounds comprising:
- two sidewalls (2) linking a crown (3), intended to enter into contact with a ground, respectively with two beads (4) intended to be mounted on a rim (5),
- a carcass reinforcement (6) extending from one bead (4) to the other through the sidewalls (2) and the crown (3), and radially inside a crown reinforcement (7) extending axially in the crown (3),
- at least one sidewall (2) comprising, on an outer sidewall face (21), at least two circumferential projections (8) radially positioned outside of a point B of the outer face of the sidewall (21) axially aligned with respect to an axially outermost point M of the carcass reinforcement (6), the axial distance between the points B and M being called sidewall thickness E,
- each circumferential projection (8) having, in a meridian plane (YZ) containing the axis of rotation of the tyre, a meridian section (81) delimited by a contour (82),
- said meridian section (81) having a maximum height H, measured at right angles from the outer side wall face (21), at least equal to E and at most equal to 3*E, and an average width L, measured parallel to the outer sidewall face (21) at mid height H/2 of the meridian section (81),
- each circumferential projection (8) consisting of a rubbery composition C1 having an elastic modulus in extension at 10% elongation M1 at least equal to 1.5 MPa and at most equal to 6 MPa,
**characterized in that** the average width L of the meridian section (81) of each circumferential projection (8) is at least equal to a minimum width Lmin and at most equal to a maximum width Lmax,
the minimum width Lmin being the width beyond which at least two distinct points of the contour (82) of the meridian section (81) enter into contact with one another, when the hemispherical end (91) of an indenter (9), of radius R equal to 15 mm, enters into contact with the circumferential projection (8), the indenter (9) having an axis D forming, in the meridian plane (YZ) and with the radial direction (ZZ'), an angle A equal to 15°, measured on the tyre mounted on a nominal rim, inflated to a nominal pressure but not flattened, and being displaced radially inwards, that is to say the width below which there is a self-contact of the circumferential projection (8) due to its folding back on itself,
and the maximum width Lmax being the width beyond which the hemispherical end (91) of the indenter (9), being displaced radially inwards, cannot move past the circumferential projection (8), that is to say the width beyond which there is a blocking of the hemispherical end (91) of the indenter (9) at the level of the circumferential protuberance (8).

2. Tyre (1) according to Claim 1, **wherein** the average width L of the meridian section (81) of each circumferential projection (8) is at least equal to a minimum width Lₘᵢₙ = 0.2^{∗}H³/M1 and at most equal to a maximum width Lₘₐₓ= 0.7^{∗}H³/M1, with H the maximum height of the meridian section (81) and M1 the elastic modulus in extension at 10% elongation of the rubbery composition C1 of the circumferential projection (8).

3. Tyre (1) according to one of Claims 1 and 2, **wherein** the contour (82) of the meridian section (81) of each circumferential projection (8) comprises a radially outer portion (821), a radially inner portion (822) and a connecting portion (823) between the radially outer portion (821) and the radially inner portion (822).

4. Tyre (1) according to Claim 3, **wherein** the meridian section (81) of each circumferential projection (8) is a trapezoid whose small side consists of the radially outer portion (821), the large side consists of the radially inner portion (822) and the small base, substantially parallel to the outer sidewall face (21), consists of the connecting portion (823).

5. Tyre (1) according to any one of Claims 1 to 4, each sidewall (2) having a rubbery composition C2, **wherein** the rubbery composition C1 of each circumferential projection (8) is identical to the rubbery composition C2 of the sidewall (2).

6. Tyre (1) according to any one of Claims 1 to 5, **wherein** each sidewall (2) comprises at least two circumferential projections (8).

7. Tyre (1) according to any one of Claims 1 to 6, **wherein** each sidewall (2) comprises at least three circumferential projections (8).
